Europäisches Patentamt

European Patent Office

Office européen des brevets

(11) Veröffentlichungsnummer: **0 133 572**
**A2**

(12) **EUROPÄISCHE PATENTANMELDUNG**

(21) Anmeldenummer: 84109390.9

(22) Anmeldetag: 08.08.84

(51) Int. Cl.⁴: **B 60 R 22/20**

(30) Priorität: 10.08.83 DE 3328798

(43) Veröffentlichungstag der Anmeldung:
27.02.85 Patentblatt 85/9

(84) Benannte Vertragsstaaten:
FR GB IT SE

(71) Anmelder: **AUTOFLUG GMBH**
**Industriestrasse 10 Postfach 1180**
**D-2084 Rellingen(DE)**

(72) Erfinder: **Zeumer, Monika**
**Graf-Ernst-Weg 17**
**D-2000 Hamburg 61(DE)**

(74) Vertreter: **Kühnemann, Klaus**
**Sonderburgstrasse 36**
**D-4000 Düsseldorf 11(DE)**

(54) Höhenverstellvorrichtung für den Befestigungs- oder Umlenkbeschlag eines Sicherheitsgurtsystems.

(57) Bei einer Vorrichtung zur Höhenverstellung des oberen Befestigungs- oder Umlenkbeschlages für den Schultergurt eines Sicherheitsgurtsystems, insbesondere in Kraftfahrzeugen, bestehend aus einer an einem Fahrzeug-Aufbauteil (Karosserie) angebrachten Riegelvorrichtung mit einer Führungsschiene und mit beiderseits eines Führungsschlitzes angeordneten Ausnehmungen, in die ein zugeordnetes Sperrglied eingreift, welches an einem den Befestigungs- oder Umlenkbeschlag tragenden Gleitstück angeordnet ist, und einer Betätigungseinrichtung für die Riegelvorrichtung besteht das Problem, daß mit der Ausbildung der Riegelvorrichtung immer auch die Art der Betätigungseinrichtung festgelegt ist. Zweck der Erfindung ist es daher die Höhenverstellvorrichtung so einzurichten, daß alle Arten von Betätigungseinrichtungen mit der Riegelvorrichtung zusammenwirken können. Hierzu wird vorgeschlagen, an der mit der jeweiligen Betätigungseinrichtung (47, 52, 57) zusammenwirkenden Stelle des Sperrgliedes (20) eine Gestaltung (30) zum mechanischen Umsetzen der Wirkungsrichtung der von der Betätigungseinrichtung (47, 52, 57) auf das Sperrglied (20) ausgeübten Kraft in die die Entriegelung des Sperrgliedes (20) herbeiführende Wirkungsrichtung anzuordnen.

./...

Fig. 2

**Patentanwälte**
**Dipl.-Ing. Klaus Kühnemann**
**Dr.-Ing. Karl-Ernst Müller**
Sonderburgstraße 36
4000 Düsseldorf 11
Telefon (02 11) 57 55 55
Postgirokonto: Köln 794 14-501

Düsseldorf, den 6. August 1984
KM/sch 5

**0133572**

Autoflug GmbH
Industriestraße 10
2084 Rellingen 2

B e s c h r e i b u n g

Höhenverstellvorrichtungen für den Be-
festigungs- oder Umlenkbeschlag eines
Sicherheitsgurtsystems

Die Erfindung betrifft eine Vorrichtung zur Höhenverstellung des oberen Befestigungs- oder Umlenkbeschlages
für den Schultergurt eines Sicherheitsgurtsystems,
insbesondere in Kraftfahrzeugen, bestehend aus
einer an einem Fahrzeug-Aufbauteil (Karosserie)
angebrachten Riegelvorrichtung mit einer Führungsschiene und mit beiderseits eines Führungsschlitzes
angeordneten Ausnehmungen, in die ein zugeordnetes
Sperrglied eingreift, welches an einem den Befestigungs-
oder Umlenkbeschlag tragenden Gleitstück angeordnet
ist, und einer Betätigungsvorrichtung für die Riegelvorrichtung.

Vorrichtungen der eingangs genannten Gattung sind in
verschiedenen Ausführungsformen bekannt. So ist beispielsweise in der DE-OS 29 47 391 eine Höhenverstellvorrichtung beschrieben, bei welcher die schwenkbar angeordnete Riegelvorrichtung durch Druck senkrecht zur Führungsschiene ausrastet und so die Höhenverstellung des Beschlages ermöglicht. Als Betätigungseinrichtung hierfür ist die Befestigungsschraube des Umlenkbeschlages an der Riegelvorrichtung vorgesehen. Bei einer anderen bekannten Vorrichtung (DE-OS 29 32 505) besteht die Riegeleinrichtung aus einer zwischen dem Boden der Führungsschiene und dem den Beschlag tragenden Schlitten angeordneten haarnadelförmigen Verriegelungsfeder, die mittels einer Drucktaste als Betätigungseinrichtung in zugehörigen Ausnehmungen der Führungsschiene ein- und ausrastbar ist.

Allen bekannten Vorrichtungen ist gemeinsam der Nachteil zu eigen, daß die jeweilige Ausbildung von Riegelvorrichtung einerseits und Betätigungseinrichtung andererseits immer einander angepaßt sein muß, wobei die beiden Teile demzufolge häufig fest miteinander verbunden sind. Wenn also die Riegelvorrichtung beispielsweise als eine in die Führungsschiene eindrückbare Feder ausgebildet ist, so ist es nicht möglich, als Betätigungseinrichtung etwa einen Drehknopf vorzusehen, ohne die Riegelvorrichtung entsprechend konstruktiv zu verändern. Dies hat zur Folge, daß jeder Abnehmer einer solchen Höhen-verstellungsvorrichtung, also insbesondere die Auto-mobilhersteller, je nach Ausbildung der Riegelvorrichtung auch hinsichtlich der damit zusammen verwendbaren Betätigungseinrichtung festgelegt sind; spätere Änderungen und Verbesserungen der Betätigungseinrichtung sind nicht ohne entsprechende Veränderung der Riegelvorrichtung möglich.

Dieser Nachteil bekannter Vorrichtungen ist insbesondere deswegen als schwerwiegend anzusehen, weil die Automobilhersteller einerseits bestrebt sind, die Zahl der in einem Fahrzeug verwendeten Einzelteile und damit auch der vorzuhaltenden Ersatzteile möglichst gering zu halten. Andererseits wollen die Hersteller jedoch nicht nur innerhalb der eigenen Palette von verschiedenen Kraftfahrzeugen, sondern auch zu den Fahrzeugen der anderen Hersteller Unterschiede im Komfort, insbesondere auch im Bedienungskomfort, bei den in einem Fahrzeug eingebauten Verstellvorrichtungen schaffen.

Der Erfindung liegt daher die Aufgabe zugrunde, eine Vorrichtung der eingangs genannten Gattung zu schaffen, bei welcher die Riegelvorrichtung losgelöst von der Art der Betätigungseinrichtung in jedes Fahrzeug einbaubar ist und der Verwender erst anschließend beliebige Arten von Betätigungseinrichtungen an der Riegelvorrichtung anbringen kann, ohne im einzelnen hinsichtlich des Zusammenwirkens von Betätigungseinrichtung und Riegelvorrichtung in der Wahl der Art der Betätigungseinrichtung beschränkt oder festgelegt zu sein.

Auch sollen nachträgliche Änderungen oder Auswechslungen der Betätigungseinrichtungen möglich sein.

Die erfindungsgemäße Lösung dieser Aufgabe sowie vorteilhafte Ausgestaltungen und Weiterbildungen derselben ergeben sich aus dem Inhalt der Patentansprüche, welcher dieser Beschreibung vorangestellt sind.

- 4 -

0133572

Infolge der Erfindung können bei konstruktiver Trennung von Riegelvorrichtung und Betätigungseinrichtung verschiedene Arten von Betätigungseinrichtungen jeweils mit der gleichbleibend ausgebildeten Riegelvorrichtung zusammenwirken, wobei an der Riegelvorrichtung an ihrer mit der Betätigungseinrichtung zusammenwirkenden Stelle eine Gestaltung mit wenigstens einer räumlich orientierten Fläche angeordnet ist, die für ein Umsetzen der aus einer beliebigen Richtung von der Betätigungseinrichtung her ankommenden Kraft in eine die Entriegelung der Riegelvorrichtung bewirkende Kraft sorgt. Vorzugsweise ist die Gestaltung sich teilkugelartig erhebend oder einsenkend ausgebildet, so daß sich gleichmäßig ansteigende und abfallende An- und Ablaufflächen für entsprechende Bezugsteile der jeweils mit der Riegelvorrichtung zusammenwirkenden Betätigungseinrichtung ergeben, wodurch die von der Betätigungseinrichtung ausgeübte Kraft ohne eine plötzliche Umsetzbewegung mit dazu erforderlichem Kraftaufwand in die Entriegelungskraft umgelenkt wird. Dies ist auch gegeben, wenn die entsprechende An- und Ablauffläche façettiert ausgebildet ist, d. h. in einer Aneinanderreihung von Klein- und Kleinstflächen besteht.

Mit der Erfindung ist der Vorteil verbunden, daß die Riegelvorrichtung immer in gleicher Weise ausgebildet sein und so in jedes beliebige Kraftfahrzeug eingebaut werden kann. Erst bei der Endmontage der Höhenverstellvorrichtung brauchen die Automobilhersteller dann die ihnen zusagenden Betätigungseinrichtungen hinzuzusetzen, so daß eine freie Auswahl unter den zur Verfügung stehenden Arten von Betätigungseinrichtungen hinsichtliche Bedienungskomfort und Möglichkeit der Anbringung an der jeweils unterschiedlich breiten B-Säule von verschiedenen Kraftfahrzeugen gegeben ist. Damit sind u. a. auch erhebliche Vereinfachungen hinsichtlich der Herstellung und Lagerhaltung der Einzelteile für die Verstellvorrichtung sichergestellt. Gleichfalls ist die Riegelvorrichtung selbst durch einfaches Zusammenstecken der Einzelteile montierbar, da keine Rücksicht mehr auf die bauliche Ausbildung der Betätigungseinrichtung selbst sowie ihrer wirkungsmäßigen Verbindung zur Riegelvorrichtung genommen werden muß. Insgesamt ist daher mit der Erfindung eine beträchtliche Kostensenkung für Herstellung und Einbau der Verstellvorrichtung verbunden.

In der Zeichnung sind Ausführungsbeispiele der Erfindung wiedergegeben, welche nachstehend beschrieben werden. Es zeigen:

Fig. 1    die Riegelvorrichtung der Höhenverstellvorrichtung in Vorderansicht,

Fig. 2    die Vorrichtung gemäß Fig. 1 im Längsschnitt,

Fig. 3    die Riegelvorrichtung in einer Unteransicht,

Fig. 4    einen Ausschnitt aus der Riegelvorrichtung mit Gleitstück teilweise im Längsschnitt,

Fig. 5    eine Stirnansicht der Riegelvorrichtung gemäß Fig. 2,

Fig. 6 die Riegelvorrichtung gemäß Fig. 2 teilweise im Längsschnitt in verriegeltem Zustand,

Fig. 7 den Gegenstand der Fig. 6 in teilweise geschnittener Unteransicht,

Fig. 8 die Riegelvorrichtung gemäß Fig. 2 teilweise im Längsschnitt in verriegeltem Zustand,

Fig. 9 den Gegenstand der Fig. 8 in teilweise geschnittener Unteransicht,

Fig. 10 ein anderes Ausführungsbeispiel der Riegelvorrichtung teilweise im Längsschnitt in verriegeltem Zustand,

Fig. 11 den Gegenstand der Fig. 10 in teilweise geschnittener Unteransicht in entriegeltem Zustand,

Fig. 12 die Betätigungseinrichtung mit Riegelvorrichtung gemäß Fig. 2 teilweise im Längsschnitt in verriegeltem Zustand,

Fig. 13 den Gegenstand der Fig. 12 in entriegeltem Zustand,

Fig. 14 ein anderes Ausführungsbeispiel der Betätigungseinrichtung mit Riegelvorrichtung gemäß Fig. 2 teilweise im Längsschnitt in verriegeltem Zustand,

Fig. 15 den Gegenstand der Fig. 14 in entriegeltem
        Zustand,

Fig. 16 ein weiteres Ausführungsbeispiel der
        Betätigungseinrichtung mit Riegelvorrichtung
        gemäß Fig. 2 teilweise im Längsschnitt in
        verriegeltem Zustand,

Fig. 17 den Gegenstand der Fig. 16 in entriegeltem
        Zustand.

Die Riegelvorrichtung 10 einer Vorrichtung zur Höhenverstellung des oberen Befestigungs- oder Umlenkbeschlages besteht aus einer einseitig geschlitzen
C-förmigen Führungsschiene 11, in welcher beiderseits
des Führungsschlitzes 12 Ausnehmungen 13 angeordnet
sind, zwischen denen sich Führungslappen 14 erstrecken. Die Führungsschiene 11 wird mittels
Befestigungsvorrichtungen 15 an der nicht dargestellten
B-Säule eines Kraftfahrzeuges als Fahrzeug-Aufbauteil
(Karosserie) angebracht. In dem Führungsschlitz 12 ist
ein Gleitstück 16 längsbeweglich angeordnet, welches
eine Bohrung 17 zur Aufnahme eines Befestigungsmittels 18
zur Befestigung des Befestigungs- oder Umlenkbeschlages 19
am Gleitstück 16 aufweist. Das Gleitstück 16 ist in seinem
Profil der Führungsschiene 11 angepaßt, so daß im
Belastungsfall, d. h. wenn bei einem Unfall das nicht
dargestellte Gurtband am Befestigungs- oder Umlenkbeschlag 19 zieht, die auftretenden Kräfte im wesentlichen formschlüssig über das Gleitstück 16 in die
Führungsschiene 11 eingeleitet werden.

In der Führungsschiene 11 ist zur Verbindung des Gleitstückes 16 mit einem Sperrglied 20 ein S-förmiges Gleitblech 21 angeordnet, dessen unterer S-Bogen das Gleitstück 16 von der offenen Seite der Führungsschiene 11 her übergreift. Das Gleitblech 21 steht in seinem das Gleitstück 16 übergreifenden Bereich aus dem C-Profil der Führungsschiene 11 heraus und weist eine Öffnung 22 zum Durchstecken des Befestigungsmittels 18 für den Befestigungs- oder Umlenkbeschlag 19 auf, so daß das Befestigungsmittel 18 auf dem Gleitblech 21 festgezogen werden kann, ohne daß es zu einem Verklemmen mit der Führungsschiene 11 kommt.

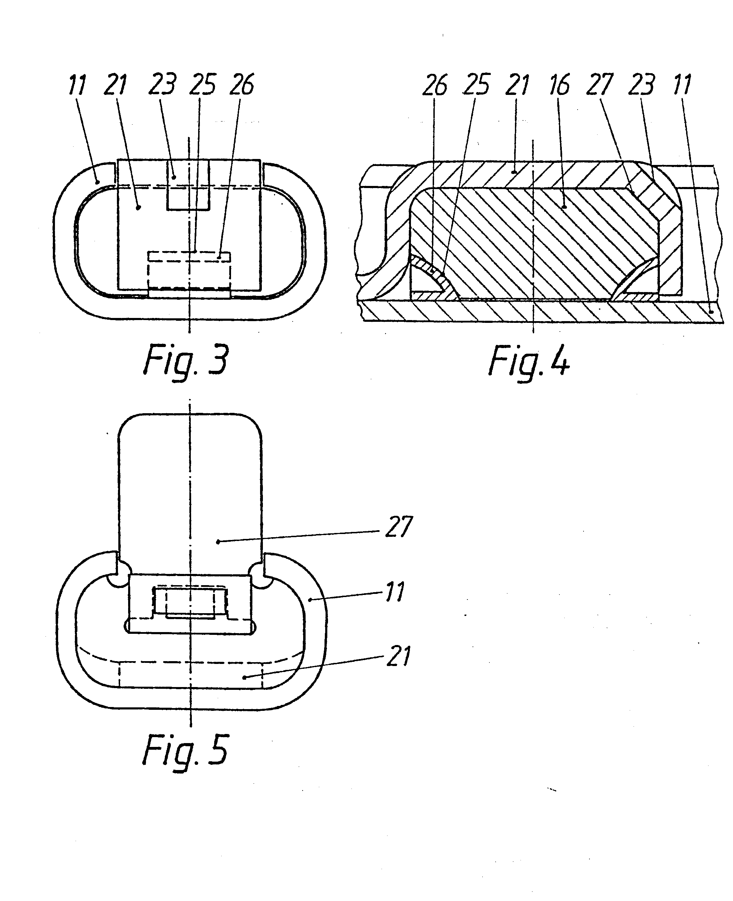

Wie den Figuren 3 und 4 zu entnehmen ist, weist das Gleitblech 21 zur Verhinderung des Verdrehens des Gleitstückes 16 beim Anziehen des Befestigungsmittels 18 Prägungen 23 auf, die in entsprechend am Gleitstück 16 vorgesehene Nuten 24 einfassen. Weiterhin sind an den Seiten des Gleitstückes 16, mit denen dieses an den Boden der Führungsschiene 11 und das Gleitblech 21 anstößt, weitere Nuten 25 ausgespart, die im wesentlichen eine dreieckige Form aufweisen und in welche sich allseitig abstützende Federelemente 26 eingesetzt sind, so daß durch die Verspannung von Führungsschiene 11, Gleitstück 16 und Gleitblech 21 Klappergeräusche der Teile gegeneinander vermieden sind.

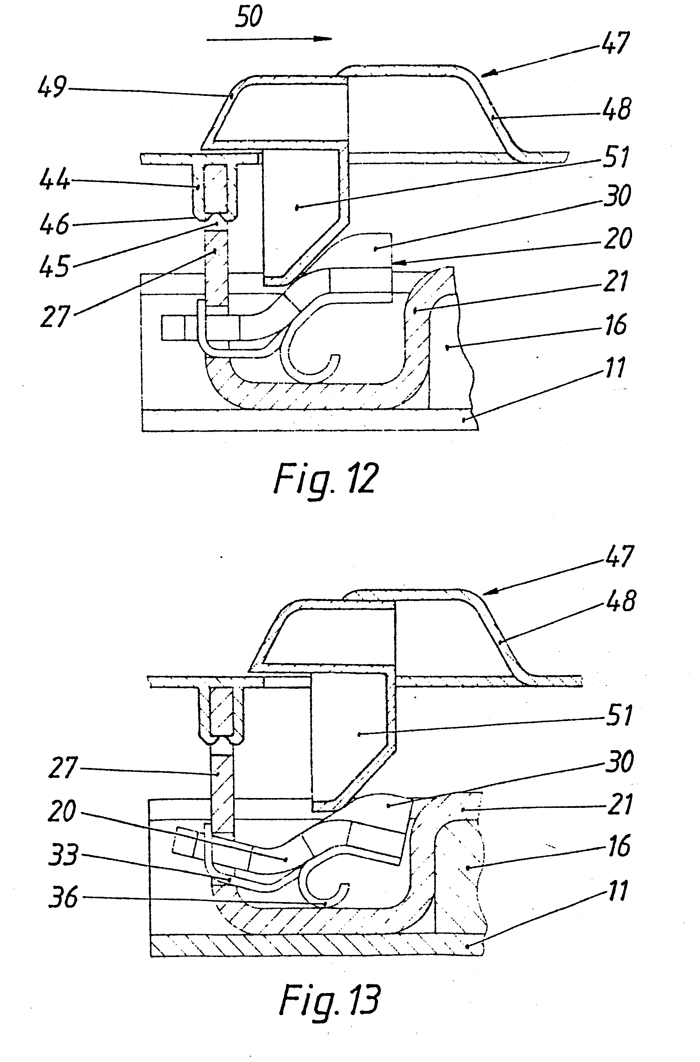

Der obere S-Bogen des Gleitbleches 21 dient zur Aufnahme des Sperrgliedes 20, welches am Gleitblech 21 gelagert ist. In diesem Bereich ist das Gleitblech 21 in seiner Ausbildung ebenfalls dem C-Profil der Führungsschiene 11 angepaßt, so daß im Belastungsfall auftretende Kräfte formschlüssig in die Führungsschiene 11 und damit in die nicht dargestellte B-Säule des Kraftfahrzeuges übertragen werden. Der obere Bogen des S-förmig gestalteten Gleitbleches 21 läuft in einen senkrecht aus der Ebene der Führungsschiene 11 hervorstehenden Ansatz 27 zur Anbringung und Halterung der Betätigungseinrichtung an der Riegelvorrichtung 10 aus (Figur 12).

In seinem in der Führungsschiene 11 gelegenen Abschnitt weist der Ansatz 27 eine Öffnung 28 auf, in welcher das Sperrglied 20 schwenkbeweglich gelagert ist. Das Sperrglied 20 ist als sich in Längsrichtung der Führungsschiene 11 vom Ansatz 27 in Richtung auf den Befestigungs- oder Umlenkbeschlag 19 erstreckender Rasthebel ausgebildet. Der Rasthebel weist an seinem Lagerende eine Verbreiterung 29 auf, mit der er die Öffnung 28 des Ansatzes 27 hintergreift und so dort festgehalten ist. An seinem freien unteren Ende ist in dem Bereich des Führungsschlitzes 12 der Führungsschiene 11 eine sich aus der Ebene der Führungsschiene 11 erhebende Gestaltung 30 angeordnet, zu deren beiden Seiten sich Rastflächen 31 befinden, mit denen das Sperrglied 20 in verriegeltem Zustand in die Ausnehmungen 13 der Führungsschiene 11 eingerastet ist. Sowohl der Übergang von der sich über die Rastflächen 31 erhebenden Gestaltung 30 zu den Rastflächen 31 als auch der Übergang von der Gestaltung 30 in Längsrichtung des Sperrgliedes 20 ist kurvenförmig ausgestaltet, so daß sich im wesentlichen für die Gestaltung 30 das Bild eines aus der Führungsschiene 11 hervorstehenden abgerundeten Buckels ergibt. Die Gestaltung 30 kann daher aus dem Sperrglied 20 ausgeprägt sein, wie auch andere Gestaltungen durch Ausprägung des Sperrgliedes hergestellt sein können.

Das Sperrglied 20 weist ferner in seinem in der Führungsschiene 11 eingedrückten Bereich beiderseits seiner Längsachse seitliche Nasen 32 auf, die in verriegeltem Zustand die Führungslappen 14 der Führungsschiene 11 untergreifen und dafür sorgen, daß das Sperrglied beim Entriegeln nicht aus der Führungsschiene 11 hervortritt.

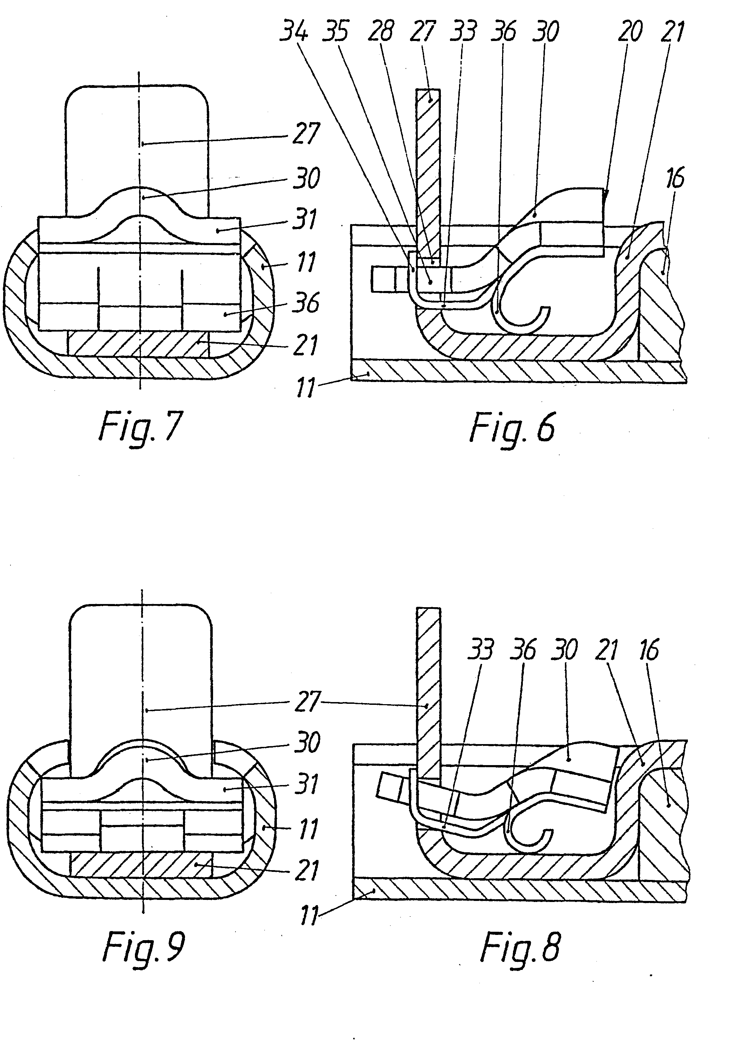

Zur Abstützung des Sperrgliedes 20 und Hervorrufen einer Rückstellkraft für das Sperrglied sind zwischen dem längsorientierten Rasthebel 20 und dem Gleitblech 21 Federn angeordnet. In dem Ausführungsbeispiel gemäß Figuren 6 - 9 ist zur Abstützung des Sperrgliedes 20 eine vorgespannte Blattfeder 33 angeordnet, die der Form des Sperrgliedes 20 folgend zwischen Sperrglied 20 und Gleitblech 21 in der Öffnung 28 des Ansatzes 27 zusammen mit dem Sperrglied 20 eingesetzt ist. Zur Befestigung der Blattfeder 33 ist deren vorderes, die Öffnung 28 des Ansatzes 27 durchgreifendes Ende 34 umgebogen und durchgreift seinerseits eine zugeordnete Öffnung 35 des Sperrgliedes 20.

Zu beiden Seiten der Blattfeder 33 sind zwei rundgebogene Federn 36 angeordnet, die sich mit ihrem einen Ende am Sperrglied 20 und mit dem anderen Ende am Gleitblech 21 abstützen und das Sperrglied 20 unter Federspannung vom Gleitblech 21 rückstellend beabstanden.

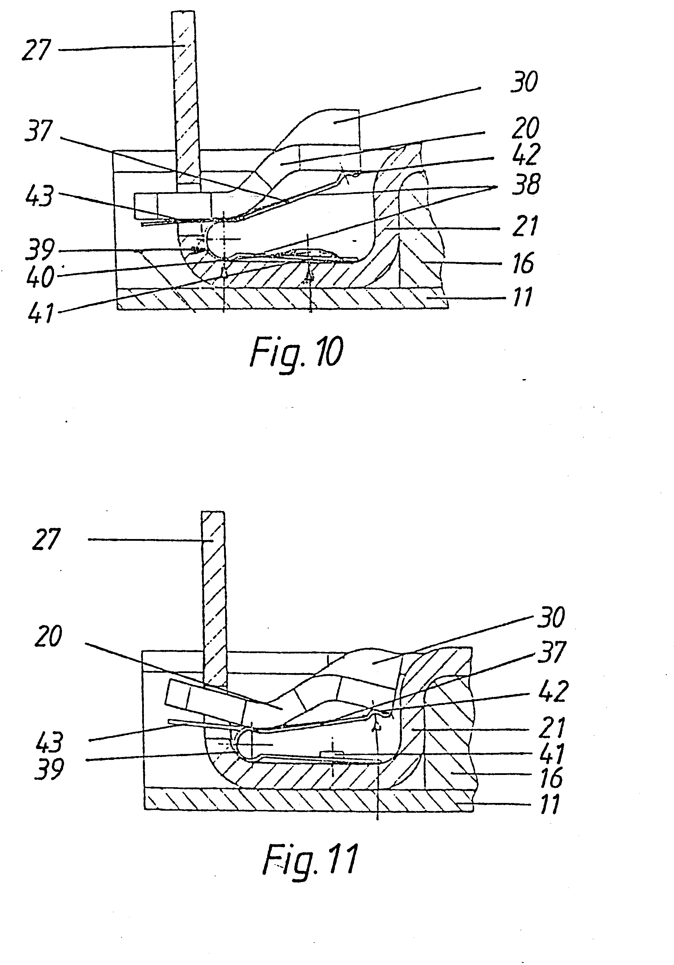

Bei einem anderen, in den Figuren 10 und 11 dargestellten Ausführungsbeispiel ist die Federwirkung auf das Sperrglied 20 durch eine im wesentlichen U-förmig gebogene, in etwa der Breite des Gleitbleches 21 und des Sperrgliedes 20 angepaßte Blattfeder 37 ausgeübt, deren U-Schenkel 38 sich einerseits am Sperrglied 20 und andererseits am Gleitblech 21 abstützen, und deren geschlossenes Ende 39 am Übergang vom Gleitblech 21 zum Ansatz 27 angeordnet ist.

Die Blattfeder 37 weist an ihrem am Gleitblech 21 anliegenden U-Schenkel 38 eine Ausnehmung 40 auf, in die ein zugeordneter Zapfen 41 oder entsprechende Ausprägung des Gleitbleches 21 eingreift und so für eine Verdrehsicherung der Feder 37 zum Gleitblech 21 sorgt.

An ihrem am Sperrglied 20 anliegenden U-Schenkel 38 ist die Feder 37 mit einer sich über die Breite der Feder erstreckenden Sicke 42 versehen, die für ein Abwälzen des Sperrgliedes an der Feder 37 beim Eindrücken des Sperrgliedes 20 in die Führungsschiene 11 sorgt.

An dem geschlossenen Ende 39 der Feder 37 ist, in der Mitte der Blattfeder 37 angeordnet, ein Ausschnitt 43 aus dem U-Bogen 39 der Blattfeder 37 herausgebogen, welcher dem Verlauf des Sperrgliedes 20 in Richtung auf dessen Lager im Ansatz 27 folgend in der Öffnung 28 des Ansatzes 27 zusammen mit dem Sperrglied 20 eingesetzt ist.

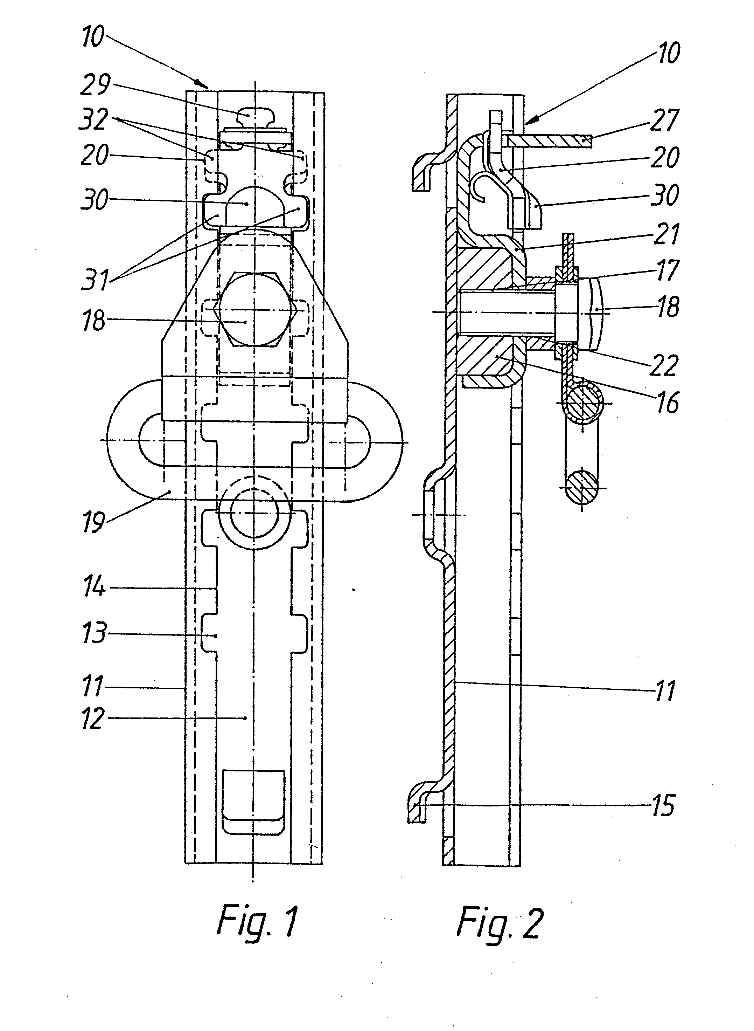

Die in den Figuren 1 - 11 dargestellte und vorstehend beschriebene Riegelvorrichtung arbeitet folgendermaßen:

In verriegeltem Zustand sind die Rastflächen 31 des Sperrgliedes 20 in die Ausnehmungen 13 der Führungsschiene 11 eingerastet, wodurch die Riegelvorrichtung 10 und damit auch der mit dem Gleitstück 16 verbundene Befestigungs- oder Umlenkbeschlag 19 in seiner Höhe festgelegt ist. Die Aufnahme der im Belastungsfall vom nicht dargestellten Gurt auf den Befestigungs- oder Umlenkbeschlag 19 und damit auf die Riegelvorrichtung 10 ausgeübten Kraft erfolgt durch das formschlüssig in das C-Profil der Führungsschiene 11 eingepaßte Gleitstück 16, wobei resultierende Restkräfte durch die Anlage der Rastflächen 31 des Sperrgliedes 20 in den Ausnehmungen 13 der Führungsschiene 11, die Abstützung der seitlichen Nasen 32 des Sperrgliedes an den Führungslappen 14 und die weitere Abstützung des Sperrgliedes 20 in dem der Führungsschiene 11 formmäßig angepaßten Gleitblech 21 aufgefangen sind.

Wird zur Ausführung der Höhenverstellung von einer Betätigungseinrichtung eine Kraft auf die aus der Ebene der Führungsschiene 11 hervorstehende Gestaltung 30 des Sperrgliedes 20 ausgeübt, so wird die Kraft infolge der räumlich-orientierten Gestaltungsfläche 30 so weit umgelenkt, bis die Kraft in Bewegungsrichtung des Sperrgliedes 20 ein Eindrücken des Sperrgliedes 20 in die Führungsschiene 11 hervorruft. Die Entriegelungskraft wirkt dabei entgegen der Kraft der Federn 33, 36 bzw. 37, die mittels einer 3-Punkt-Auflage am Gleitblech 21 abgestützt sind. Das Sperrglied 20 wird beim Eindrücken in die Führungsschiene 11 durch eine symmetrische Auflage der Rastflächen 31 auf den Federn 36 bzw. dem U-Schenkel 38 der Feder 37 geführt.

Mit Eintauchen des Sperrgliedes 20 entgegen der Wirkung der Federn 33, 36 bzw. 37 kommen die Rastflächen 31 aus den Ausnehmungen 13 der Führungsschiene 11 frei, und das Sperrglied 20 ist entriegelt, wonach das Gleitstück 16 samt Umlenk- oder Befestigungsbeschlag 19 zusammen mit dem Gleitblech 21 und daran über den Ansatz 27 gehaltener Betätigungseinrichtung der Höhe nach verschiebbar ist. Beim Verschieben sorgen die entsprechend angeordneten Nasen 32 sowie die Rastflächen 31 des Sperrgliedes 20 jeweils dafür, daß das Sperrglied 20 in der Führungsschiene 11 gehalten ist und nicht daraus hervortreten kann, indem die Nasen 32 und die Rastflächen 31 beim Verschieben die Ausnehmungen 13 der Führungsschiene 11 nicht gleichzeitig passieren.

Beim Ent- bzw. Verriegeln der Riegelvorrichtung 10 sorgen die Federn 33, 36 bzw. 37 nicht nur für eine entsprechende Rückstellung des Sperrgliedes 20 in die Verriegelungsposition, sondern sie dienen auch maßgeblich zur Sicherung des Sperrgliedes 20 gegen ein Ausrasten infolge der bei einem Seitenaufprall auf die B-Säule des Kraftfahrzeuges in Richtung der Verbzs Entriegelungskraft wirkenden Stoßkraft. Diese Stoßkraft wird ausgeschaltet durch einen entsprechenden Massenausgleich von Sperrglied 20 und Federn 33, 37, so daß die aus der Stoßkraft resultierende Querbeschleunigung sowohl in Richtung B-Säule als auch in Richtung Fahrgastraum nicht zum Ausrasten des Sperrgliedes 20 führt, wobei jeweils die zusammen mit dem Sperrglied 20 in der Öffnung 28 des Ansatzes 27 eingesetzte Blattfeder 33 bzw. das Federteil 43 der Feder 37 der Querbeschleunigung zusätzlich entgegenwirkt.

In den Figuren 12 - 17 ist das Zusammenwirken der Riegelvorrichtung 10 mit einigen Arten von Betätigungseinrichtungen dargestellt, welche jeweils als Abdeckung der Führungsschiene 11 dienen und mit der Riegelvorrichtung 10 mitlaufen. Hierzu sind die Betätigungseinrichtungen jeweils mit einer Halterung 44 versehen, die auf den Ansatz 27 der Riegelvorrichtung 10 aufgeschoben und mittels an der Halterung 44 angebrachter und in eine zugeordnete Ausnehmung 45 des Ansatzes 27 eingreifender Vorsprünge 46 mit dem Ansatz 27 der Riegelvorrichtung 10 verrastet ist.

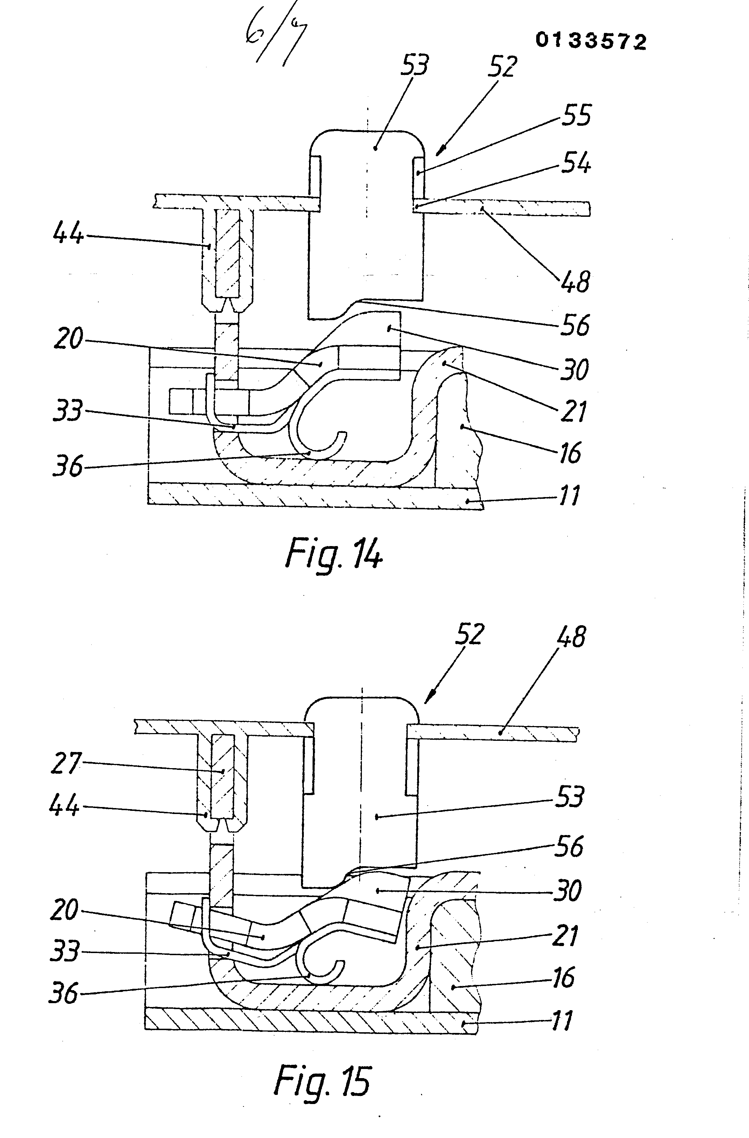

In dem Ausführungsbeispiel gemäß den Figuren 12 und 13 besteht die Betätigungseinrichtung 47 aus einem Gehäuse 48, in welches parallel zur Führungsschiene 11 eine Schiebetaste 49 in Richtung des Pfeils 50 eindrückbar ist. An der Schiebetaste 49 ist senkrecht zu ihrer Bewegungsbahn ein bis in den Führungsschlitz 12 der Riegelvorrichtung 10 reichender, im wesentlichen rechteckiger Arm 51 angeformt, der zwischen dem Ansatz 27 mit Halterung 44 und der Gestaltung 30 des Sperrgliedes 20 angeordnet ist. An seiner der Gestaltung 30 des Sperrgliedes 20 zugewandten Seite ist der Arm 51 so abgeschrägt, daß eine Gegengestaltung zur Gestaltung 30 des Sperrgliedes 20 gegeben ist.

Beim Eindrücken der Schiebetaste 49 in das Gehäuse 48 läuft die abgeschrägte Kante des Armes 51 im Führungsschlitz 12 auf die Gestaltung 30 des Sperrgliedes 20 auf und drückt mit zunehmendem Einschubweg das Sperrglied 20 in die Führungsschiene 11 ein, womit gemäß der Beschreibung der Funktion der Riegelvorrichtung 10 gemäß Figuren 1 - 11 eine Entriegelung des Sperrgliedes 20 verbunden ist.

Bei diesem Ausführungsbeispiel braucht nicht nur
eine von oben in Richtung des Pfeiles 50 eindrückbare Schiebetaste vorgesehen sein, vielmehr kann die
Schiebetaste auch von unten einschiebbar sein, was
eine entsprechende Ausbildung der Gestaltung 30 des
Sperrgliedes 20 voraussetzt. Ebenso ist es möglich, in
dem Gehäuse 48 zwei gegenläufig bewegliche Schiebetasten mit jeweils zugeordneten Armen anzuordnen.

In den Figuren 14 und 15 ist ein Ausführungsbeispiel
einer Betätigungseinrichtung dargestellt, bei welchem
eine Betätigungseinrichtung 52 eine in das wie beim
vorhergehenden Ausführungsbeispiel ausgebildetes
und am Ansatz 27 angebrachtes Gehäuse 48 senkrecht zur
Führungsschiene 11 eindrückbare Drucktaste 53 aufweist,
wobei im Bereich des Einschubweges für die Drucktaste 53
im Gehäuse 48 Vorsprünge 54 angeordnet sind, die in
zugeordnete Ausnehmungen 55 in der Drucktaste 53 eingreifen und die Drucktaste 53 so im Gehäuse 48 führen.
Die Drucktaste 53 reicht im entriegelten Zustand der
Riegelvorrichtung 10 entsprechend Figur 14 bis an die
Gestaltung 30 des Sperrgliedes 20 heran und weist an
ihrem unteren Ende eine Stufe 56 auf, deren Übergänge
gerundet sind und insofern der teilkugelartigen Ausbildung des Gestaltung 30 des Sperrgliedes 20 entsprechen.

Durch Eindrücken der Drucktaste 53 in das Gehäuse 48
legt sich das untere Ende der Drucktaste 53 auf die Gestaltung 30 des Sperrgliedes 20 und drückt diese
mit dem Sperrglied 20 in die Führungsschiene 11 bis
zur Entriegelung des Sperrgliedes 20 ein. Hierzu kann
nach einem weiteren Ausführungsbeispiel die Drucktaste 53 auch an ihrem einen Ende fest mit dem Gehäuse 48
verbunden und schwenkbeweglich gelagert sein.

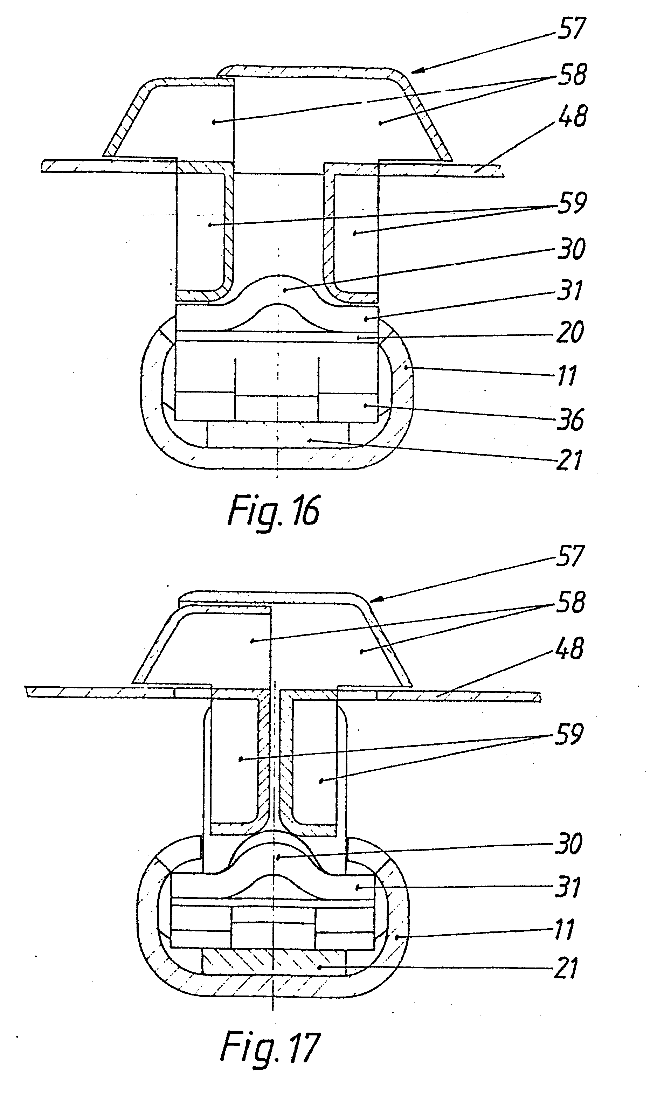

Bei einem weiteren, aus den Figuren 16 und 17 ersichtlichen Ausführungsbeispiel, ist eine Betätigungseinrichtung 57
vorgesehen, die aus zwei im Gehäuse 48 angeordneten
gegenläufig ineinander schachtelartig einschiebbaren
Schiebetasten 58 besteht, wobei die Bewegungsbahn der
Schiebetasten 58 horizontal quer zur Führungsschiene 11
angeordnet ist. An den Schiebetasten 58 ist senkrecht
zu ihrer Bewegungsbahn jeweils ein im wesentlichen rechteckiger Arm 59 angeordnet, deren Breite der Abmessung
der Rastflächen 31 des Sperrgliedes 20 entspricht und
die in verriegeltem Zustand gemäß Figur 16 bis an die
Rastflächen 31 des Sperrgliedes 20 heranreichen. Die der
Gestaltung 30 des Sperrgliedes 20 zugewandten Seitenkanten der Arme 59 sind entsprechend der kurvenförmigen
Ausbildung des Überganges von der Gestaltung 30 zu
den Rastflächen 31 gerundet.

Beim Eindrücken der Schiebetasten 58 in das Gehäuse 48
der Betätigungseinrichtung 57 laufen die gerundeten
Seitenkanten der Arme 59 von den Rastflächen 31 des
Sperrgliedes her auf die Gestaltung 30 auf und drücken
diese mit zunehmendem Einschubweg in die Führungsschiene 11
bis zur Entriegelung des Sperrgliedes 20 ein. Bei anderen
Ausführungsbeispielen kann auch nur eine Schiebetaste 58
vorgesehen sein, die zur Entriegelung des Sperrgliedes 20
ausreichend ist.

Bei einem weiteren, nicht dargestellten Ausführungsbeispiel ist die Betätigungseinrichtung als ein im Gehäuse gelagerter Drehknopf ausgebildet, der in gleicher Weise wie bei den vorstehend beschriebenen Ausführungsbeispielen ein Bezugsteil aufweist, welches bis an das Sperrglied 20 reicht und mit einer zur Gestaltung 30 des Sperrgliedes 20 entsprechend geformten Gegengestaltung versehen ist, die beim Drehen des Drehknopfes auf die Gestaltung 30 des Sperrgliedes 20 aufläuft und mit dieser bis zur Entriegelung des Sperrgliedes 20 zusammenwirkt.

Schließlich kann bei allen Ausführungsbeispielen von Riegelvorrichtung und Betätigungseinrichtung vorgesehen sein, daß zur Vermeidung von Klappergeräuschen die jeweils aneinanderstoßenden Bauteile mit einem Überzug aus Kunststoff versehen sind.

Wie sich im übrigen entnehmen läßt, wird mit der Erfindung auch erreicht, daß die Befestigung eines Seriengurtes ohne besondere Lagerhaltung für Festpunkt und Höhenversteller das Gurtzeug betreffend möglich ist. Die Ausgestaltung von Gleitstück 16 und Gleitblech 21 mit Nut 24 und Ausprägung 23 ermöglichen eine verdrehsichernde Montage des Befestigungs- oder Umlenkbeschlages 19 des Seriengurtes.

Die in der vorstehenden Beschreibung, den Patentansprüchen, der Zusammenfassung und der Zeichnung offenbarten Merkmale des Anmeldungsgegenstandes können sowohl einzeln als auch in beliebigen Kombinationen untereinander für die Verwirklichung der Erfindung in ihren verschiedenen Ausführungsformen wesentlich sein.

Patentansprüche

Patentansprüche

1. Vorrichtung zur Höhenverstellung des oberen Befestigungs- oder Umlenkbeschlages für den Schultergurt eines Sicherheitsgurtsystems, insbesondere in Kraftfahrzeugen, bestehend aus einer an einem Fahrzeug-Aufbauteil (Karosserie) angebrachten Riegelvorrichtung mit einer Führungsschiene und mit beiderseits eines Führungsschlitzes angeordneten Ausnehmungen, in die ein zugeordnetes Sperrglied eingreift, welches an einem den Befestigungs- oder Umlenkbeschlag tragenden Gleitstück angeordnet ist, und einer Betätigungseinrichtung für die Riegelvorrichtung, dadurch gekennzeichnet, daß die Riegelvorrichtung (10) unabhängig von der jeweiligen Kraftwirkungsrichtung der Betätigungseinrichtung ausgebildet und mit verschiedenen Arten von Betätigungseinrichtungen (47, 52, 57) zur Ver- und Entriegelung des Sperrgliedes (20) koppelbar ist, wobei das Sperrglied (20) an der mit der Betätigungseinrichtung zusammenwirkenden Stelle eine Gestaltung (30) zum mechanischen Umsetzen der Wirkungsrichtung der von der Betätigungseinrichtung (47, 52, 57) auf das Sperrglied (20) ausgeübten Kraft in die die Entriegelung des Sperrgliedes (20)
herbeiführende Wirkungsrichtung aufweist.

2. Vorrichtung nach Anspruch 1, dadurch gekennzeichnet,
daß die Gestaltung (30) aus der Anordnung von wenigstens
einer räumlich orientierten, die ankommende Kraftwirkung im Winkel zur abgehenden Kraftwirkung umlenkenden An- und Ablauffläche (30) für das Bezugsteil
(51, 56, 59) der Betätigungseinrichtung (47, 52, 57)
besteht.

3. Vorrichtung nach Anspruch 2, dadurch gekennzeichnet,
daß die Gestaltung (30) sich teilkugelartig, gekrümmt
und/oder facettiert, erhebend ausgebildet ist.

4. Vorrichtung nach Anspruch 2, dadurch gekennzeichnet,
daß die Gestaltung (30) als Einsenkung ausgebildet ist.

5. Vorrichtung nach Anspruch 2, dadurch gekennzeichnet,
daß die Gestaltung (30) als Öffnung mit abgeschrägten
Rand- und/oder Durchbruchsflächen ausgebildet ist.

6. Vorrichtung nach Anspruch 2, dadurch gekennzeichnet,
daß die Gestaltung (30) wenigstens eine schiefe Ebene
aufweist.

7. Vorrichtung nach Anspruch 1 und wenigstens einem der
weiteren vorangehenden Ansprüche, dadurch gekennzeichnet, daß das Sperrglied (20) als ein in Längsrichtung der Führungsschiene (11) verlaufender Rasthebel ausgebildet ist, der mit seinem einen Ende

am Gleitstück (16) schwenkbeweglich gelagert ist und an seinem anderen Ende (--) seitlich der Gestaltung (30) angeordnete Rastflächen (31) aufweist, mit welchen das Sperrglied (20) zur Verriegelung in beiderseits des Führungsschlitzes (12) der Führungsschiene (11) befindliche Ausnehmungen (13) einrastbar ist.

8. Vorrichtung nach Anspruch 7, dadurch gekennzeichnet, daß der Übergang der sich erhebenden oder eingesenkten Gestaltung (30) des Rasthebels zu den Rastflächen (31) kurvenförmig ausgebildet ist.

9. Vorrichtung nach Anspruch 7 oder 8, dadurch gekennzeichnet, daß der Übergang der Gestaltung (30) des Rasthebels in Richtung auf das Lagerende (29) kurvenförmig ausgebildet ist.

10. Vorrichtung nach Anspruch 7, dadurch gekennzeichnet, daß das Sperrglied (20) in seinem innerhalb der Führungsschiene (11) gelegenen Abschnitt seitliche Nasen (32) aufweist, die in verriegeltem Zustand die zwischen den Ausnehmungen (13) der Führungsschiene (11) befindlichen Führungslappen (14) der Führungsschiene (11) untergreifen.

11. Vorrichtung nach wenigstens einem der Ansprüche 1 - 10, dadurch gekennzeichnet, daß die Riegelvorrichtung (10) einen aus der Ebene der Führungsschiene (11) hervorstehenden Ansatz (27) zur Anbringung der Betätigungseinrichtung (47,52,57) aufweist.

12. Vorrichtung nach Anspruch 11, dadurch gekennzeichnet, daß der Ansatz (27) Teil eines in der Führungsschiene (11) verschieblichen und mit dem Gleitstück (16) verbundenen Gleitbleches (21) ist.

13. Vorrichtung nach Anspruch 12, dadurch gekennzeichnet, daß die Form des Gleitbleches (21) dem Profil der Führungsschiene (11) angepaßt ist.

14. Vorrichtung nach Anspruch 12 oder 13, dadurch gekennzeichnet, daß die Verbindung von Gleitstück (16) und Gleitblech (21) kraftschlüssig ausgebildet ist.

15. Vorrichtung nach Anspruch 12 oder 13, dadurch gekennzeichnet, daß die Verbindung von Gleitstück (16) und Gleitblech (21) formschlüssig ausgebildet ist.

16. Vorrichtung nach einem der Ansprüche 12 - 15, dadurch gekennzeichnet, daß das Gleitblech (21) im wesentlichen S-förmig ausgebildet ist und das obere Ende des S-Bogens den Ansatz (27) zur Anbringung der Betätigungseinrichtung (47,52, 57 ) bildet, wobei der obere S-Bogen als Lager das Sperrglied (20) aufnimmt und der untere S-Bogen das Gleitstück (21) von der offenen Seite der Führungsschiene (11) her übergreift.

17. Vorrichtung nach Anspruch 16, dadurch gekennzeichnet, daß das Gleitblech (21) in seinem das Gleitstück (16) übergreifenden Bereich aus dem Profil der Führungsschiene (11) hervorsteht.

18. Vorrichtung nach Anspruch 17, dadurch gekennzeichnet, daß das Gleitblech (21) eine Öffnung (22) zum Durchstecken eines Befestigungsmittels (18) für den Umlenkbeschlag (19) am Gleitstück (16) aufweist.

19. Vorrichtung nach wenigstens einem der vorangehenden Ansprüche, dadurch gekennzeichnet, daß das Gleitblech (21) in seinem das Gleitstück (16) übergreifenden Bereich innenseitig Ausprägungen (23) hat, die in entsprechenden Nuten (24) des Gleitstückes (16) eingreifen.

20. Vorrichtung nach wenigstens einem der vorangehenden Ansprüche, dadurch gekennzeichnet, daß das Gleitstück (16) Nuten (25) zur Aufnahme von Federelementen (26 aufweist.

21. Vorrichtung nach Anspruch 20, dadurch gekennzeichnet, daß die Nuten (25) an den Seiten des Gleitstückes (16) angeordnet sind, mit denen das Gleitstück (16) an die Führungsschiene (11) und das Gleitblech (21) anstößt.

22. Vorrichtung nach Anspruch 21, dadurch gekennzeichnet, daß sich die Federelemente (26) allseitig abstützen.

23. Vorrichtung nach wenigstens einem der Ansprüche 1 - 22, dadurch gekennzeichnet, daß der Ansatz (27) in seinem in der Führungsschiene gelegenen Bereich eine Öffnung (28 aufweist, in der das Sperrglied (20) unter Federspannung schwenkbeweglich gelagert ist.

24. Vorrichtung nach Anspruch 23, dadurch gekennzeichnet, daß sich das Sperrglied (20) am Ansatz (27) mittels einer in die Öffnung (28) des Ansatzes (27) eingesetzten Feder (--) abstützt.

25. Vorrichtung nach Anspruch 24, dadurch gekennzeichnet, daß die Feder als Blattfeder (33) ausgebildet und in ihrer Gestalt dem Sperrglied (20) angepaßt ist.

26. Vorrichtung nach Anspruch 24 oder 25, dadurch gekennzeichnet, daß die Blattfeder (33) an ihrem die Öffnung (28) des Ansatzes (27) durchgreifenden Ende (34) umgebogen ist und mit dem umgebogenen Ende eine zugeordnete Ausnehmung (35) des Sperrgliedes (20) durchgreift.

27. Vorrichtung nach einem der Ansprüche 23 - 26, dadurch gekennzeichnet, daß zu beiden Seiten der Blattfeder (33) bogenförmig ausgebildete Federn (36) vorgesehen sind, die sich mit ihrem einen Ende an dem Sperrglied (20) und dem anderen Ende am Gleitblech (21) abstützen und das Sperrglied (20) unter Federspannung vom Gleitblech (21) rückstellend beabstanden.

28. Vorrichtung nach Anspruch 24, dadurch gekennzeichnet, daß die Feder als eine im wesentlichen U-förmig gebogene Blattfeder (37) ausgebildet ist, die mit ihrem geschlossenen Ende am Übergang des Gleitbleches (21) zum Ansatz (27) mit darin gelagertem Sperrglied (20) anliegt und deren U-Schenkel sich einerseits am Sperrglied (20) und andererseits am Gleitblech (21) abstützen, und aus deren geschlossenem Ende ein mittlerer Ausschnitt (43) herausgebogen ist, welcher dem Verlauf des Sperrgliedes (20) folgend in der Öffnung (28) des Ansatzes (27) zur Lagerung des Sperrgliedes (20) eingesetzt ist.

29. Vorrichtung nach Anspruch 28, dadurch gekennzeichnet, daß die Feder (37) in ihrem am Gleitblech (21) anliegenden U-Schenkel eine Ausnehmung (40) zur Aufnahme eines die Feder verdrehsichernden Zapfens (41) des Gleitbleches (21) aufweist.

30. Vorrichtung nach Anspruch 28, dadurch gekennzeichnet, daß die Feder (37) an ihrem am Sperrglied anliegenden U-Schenkel eine dem Sperrglied (20) zugewandte Sicke (42) aufweist.

31. Vorrichtung nach wenigstens einem der Ansprüche 1 - 30, dadurch gekennzeichnet, daß die Betätigungseinrichtung (47, 52, 57) eine auf den Ansatz (27) der Riegelvorrichtung (10) aufsteckbare Halterung (44) aufweist.

32. Vorrichtung nach Anspruch 31, dadurch gekennzeichnet, daß der Ansatz (27) zur Aufnahme der Halterung (44) der Betätigungseinrichtung eine Öffnung (45) aufweist, in die an der Halterung (44) angebrachte Vorsprünge (46) einrastbar sind.

33. Vorrichtung nach wenigstens einem der Ansprüche 1 - 32, dadurch gekennzeichnet, daß die Betätigungseinrichtung (47) als eine parallel zur Führungsschiene (11) bewegliche Schiebetaste (49) ausgebildet ist, die in einem sie geradführenden Gehäuse (48) verschiebbar ist, und daß an der Schiebetaste (49) senkrecht zu ihrer Bewegungsbahn ein bis in den Führungsschlitz (12) der Führungsschiene (11) reichender Arm (51) angeformt ist, der mit der Gestaltung (30) des Sperrgliedes (20) zusammenwirkt.

34. Vorrichtung nach Anspruch 33, dadurch gekennzeichnet, daß der Arm (51) der Schiebetaste (49) an seiner der Gestaltung (30) zugewandten Seite entsprechend der
Gestaltung des Sperrgliedes (20) räumlich gegenorientiert gestaltet ist.

35. Vorrichtung nach Anspruch 33 oder 34, dadurch gekennzeichnet, daß in dem Gehäuse (48) der Betätigungseinrichtung (47) zwei gegenläufig bewegliche Schiebetasten (49) mit jeweils zugeordneten Armen (51) angeordnet sind.

36. Vorrichtung nach wenigstens einem der Ansprüche 1 - 32,
dadurch gekennzeichnet, daß die Betätigungseinrichtung (52)
als eine senkrecht zur Führungsschiene (11) bewegliche
Drucktaste (53) ausgebildet ist, die in ein sie geradführendes Gehäuse (48) eindrückbar ist, wobei die
Drucktaste (53) zu ihrer Führung im Bereich ihres Einschubweges einander gegenüberliegende Ausnehmungen (55)
aufweist, in die zugeordnete Vorsprünge (54) der
Gehäuseabdeckung (48) eingreifen, und daß die Drucktaste (53) in entriegeltem Zustand mit Abstand bis an
die Gestaltung (30) des Sperrgliedes (20) heranreicht
und an ihrem dem Sperrglied zugewandten Ende der Form
der Gestaltung (30) entsprechend gegengestaltet ist.

37. Vorrichtung nach Anspruch 36, dadurch gekennzeichnet,
daß die Gegengestaltung der Drucktaste (53) aus einer
Stufe (56) besteht, deren Stufenübergänge gerundet sind.

38. Vorrichtung nach einem der Ansprüche 36 oder 37, dadurch
gekennzeichnet, daß die Drucktaste (53) an ihrem einen
Ende fest mit dem Gehäuse (48) verbunden und schwenkbeweglich gelagert ist.

39. Vorrichtung nach wenigstens einem der Ansprüche1 - 32, dadurch gekennzeichnet, daß die Betätigungseinrichtung (57) als eine horizontal quer zur Führungsschiene (11) bewegliche Schiebetaste (58) ausgebildet ist, die in einem sie geradführenden Gehäuse (48) verschiebbar ist, und daß an der Schiebetaste (58) senkrecht zu ihrer Bewegungsbahn im Bereich des Führungsschlitzes (12) ein Arm (59) angeordnet ist, dessen Breite den Rastflächen (31) des Sperrgliedes (20) entspricht und dessen der Gestaltung (30) des Sperrgliedes (20) zugewandte Seitenkante (--) abgerundet ist.

40. Vorrichtung nach Anspruch 39, dadurch gekennzeichnet, daß in dem Gehäuse (48) zwei gegenläufig, ineinander schachtelartig einschiebbare Schiebetasten (58) mit jeweils zugeordneten Armen (59) angeordnet sind.

41. Vorrichtung nach wenigstens einem der Ansprüche 1 - 32, dadurch gekennzeichnet, daß die Betätigungseinrichtung als ein im Gehäuse gelagerter Drehgriff ausgebildet ist, der mittels einer an das Sperrglied (20) reichenden, an ihrem unteren Ende entsprechend der Gestaltung (30) des Sperrgliedes geformten Gegengestaltung mit der Gestaltung des Sperrgliedes zu dessen Ver- bzw. Entriegelung zusammenwirkt.

42. Vorrichtung nach Anspruch 1 - 41, gekennzeichnet durch Kunststoffbeschichtung aller Berührungslärm verursachenden Bauteile.

Zusammenfassung

1/7

0133572

Fig. 1

Fig. 2

0133572

11 21 23 25 26

*Fig. 3*

26 25 21 16 27 23 11

*Fig. 4*

27

11

21

*Fig. 5*

0133572

Fig. 7

Fig. 6

Fig. 9

Fig. 8

4/7

0133572

Fig. 10

Fig. 11

Fig. 12

Fig. 13

Fig. 14

Fig. 15

7/7

0133572

Fig. 16

Fig. 17